# EUROPEAN PATENT SPECIFICATION

(11) **EP 4 547 892 B1**
(45) Date of publication and mention of the grant of the patent: **23.09.2026**
(21) Application number: 23738652.9
(22) Date of filing: 30.06.2023
(51) Int. Cl.: C25B 1/04, C25B 9/65, C25B 9/75, C25B 9/77, C25B 15/00, H01M 8/0247, H01M 8/0258

(54) **METHOD OF ASSEMBLY OF A WATER ELECTROLYSIS STACK, BIPOLAR PLATES CONFIGURED FOR USE IN AN ELECTROLYSER STACK AND USE OF BIPOLAR PLATES**
VERFAHREN ZUR MONTAGE EINES WASSERELEKTROLYSESTAPELS, BIPOLARE PLATTEN ZUR VERWENDUNG IN EINEM ELEKTROLYSESTAPEL UND VERWENDUNG VON BIPOLAREN PLATTEN
PROCÉDÉ D'ASSEMBLAGE D'UN EMPILEMENT D'ÉLECTROLYSE DE L'EAU, PLAQUES BIPOLAIRES CONFIGURÉES POUR UNE UTILISATION DANS UN EMPILEMENT D'ÉLECTROLYSEUR ET UTILISATION DE PLAQUES BIPOLAIRES

(30) Priority: 01.07.2022 DK PA202200635
(43) Date of publication of application: 07.05.2025
(73) Proprietor: thyssenkrupp nucera AG & Co. KGaA, 44269 Dortmund (DE)
(72) Inventor: NIELSEN, Morten Tvedskov, 6000 Kolding (DK); RASMUSSEN, Anders Rønne, 6000 Kolding (DK); SØRENSEN, Christian Buhl, 6000 Kolding (DK)
(74) Representative: thyssenkrupp Intellectual Property GmbH
(86) International application number: PCT/EP2023/068041
(87) International publication number: WO 2024/003370

(56) References cited:
- EP-A1- 3 798 335
- WO-A2-2004/004038
- DE-A1- 102020 212 744
- US-A1- 2021 210 773

## Description

The present invention relates to a method of assembling a water electrolysis stack. Further, the present invention relates to bipolar plates configured for use in an electrolyser stack. Yet further, the present invention relates to a use of bipolar plates.

### Background of the invention

WO 2004/004038 A2 discloses a fuel cell including a pair of separators and a plurality of electrolyte electrode assemblies between the separators. The electrolyte electrode assemblies has a small circular disk shape. Eight electrolyte electrode assemblies are arranged along an inner circle and eight electrolyte electrode assemblies are arranged along an outer circle concentric with a circular hole. Each of the separators includes a plurality of plates stacked together. A fuel gas channel for supplying a fuel gas to anodes of the electrolyte electrode assemblies, an oxygen-containing gas channel for supplying an oxygen-containing gas to cathodes of the electrolyte electrode assemblies are formed between the plates.

The bipolar plates used in electrolysers for water electrolysis, such as in pressurised water electrolysers, have the electrodes (cathode and anode) arranged at opposite sides of the plates, and usually welded to bumps, which could also be called protrusions, which protrusions extend orthogonally to a midplane of the bipolar plate and in opposite directions away from the plates. The protrusions ensure that a distance between the bipolar plate and the electrode is provided, wherein the electrolyte may flow and be continually exchanged during use of the electrolyser. Between any two consecutive bipolar plates of an electrolyser of the above kind, a sandwich comprising electrode-diaphragm-electrode (also named EDE sandwich) shall reside, the two electrodes being always a cathode and an anode. It is important, that there is no gap between the electrodes and the diaphragm. It has surprisingly been learned that protrusions, which are aligned opposite each other on each side of the EDE sandwich may result in a less than desirable zero gap relationship between diaphragm and electrodes. Especially in the regions near the outer perimeter of the bipolar plates, this may be a pronounced problem, especially when protrusions are not evenly distributed along the outer perimeter of the bipolar plates. If small pressure differences between the two sides of a diaphragm arises, the electrode material, if it is compliant in some measure, may be deformed permanently, and thus allow a permanent space between electrode material and diaphragm, which is highly undesirable. It is also important in some types of electrodes, that they be oriented correctly according to a dominating flow direction within the electrolyser chambers bordering the two sides of each bipolar plate in an electrolyser. Thus, bipolar plates are desired, which differs from prior art plates, and which will allow an improved assembly method to be used, and furthermore allow an improved stack to be assembled.

### Summary of the invention

In a first aspect of the invention, the objects may be achieved by bipolar plates configured for use in an electrolyser cell stack, wherein each bipolar plate comprises two opposed surfaces and spaced apart spacers extending outwards from a surface of the bipolar plate, wherein the spacers are arranged along concentric circles with spacers alternatingly protruding in opposite directions from the opposed surfaces and relative to a midplane (2) of the bipolar plate (1) along each concentric circle (8), and wherein an even number of spacers (7) are provided in each circumferential circle (8).

The invention also concerns bipolar plates configured for use in an electrolyser cell stack, wherein each polar plate comprises a plate midplane, and whereby the plate comprises spaced apart uniform spacers extending in opposed directions from the midplane. Further, according to the invention, all spacers are arranged along concentric circles with spacers alternatingly protruding in opposite directions relative to the midplane along each concentric circle, and whereby an even number of spacers are provided in each circumferential circle

When spacers are aligned along concentric circles which are arranged concentrically with the centre of the round bipolar plate, there will be an outermost of the concentric circles with spacers, and as they also intermittently protrude, in each of the two directions, away from the plate, an even distribution of spacers will be achieved along the periphery of the bipolar plate. When all spacers, irrespective of whichever way they protrude, are mapped out identically in all plates, it further becomes easy to rotate any bipolar plate around a center axis of a plate during assembly and place it in a predefined angular position and especially, to rotate it into an angular position identical to the angular position of a below plate. If this is done throughout the stack, all spacers shall inevitably be aligned along axes parallel to the length axis of the stack, and if the plates are also not overturned with respect to each other, all spacers shall be aligned along axes parallel to the centre axis of the stack and all spacers aligned in any such axis shall protrude in the same direction.

The manufacturing of the plate to comprise spacers will usually comprise a deep drawing operation in one or more steps. The spacers may be produced one by one in a numerically controlled deep drawer, or possibly all spacers protruding in one direction or all spacers protruding in both directions are produced in operations, such as deep draw operations, by rolling or any other known manner.

In some embodiments, the spacers are formed as protrusions (or bumps) from the plate.

In a further embodiment, the spacers are formed as essentially semi-spherical protrusions, protruding from the plate.

In a further embodiments, the protrusions forming the spacers each comprises a flat top part.

In a further embodiment of the invention, the bipolar plates are made such that the nominal thickness of an EDE comprising an electrode, a diaphragm and yet an electrode exceeds the distance between two adjacent virtual planes with a predetermined measure, where the virtual planes inscribe the flat tops of the spacers.

The cell is here defined as consisting of the following
- a bipolar plate,
- the spacers therein extending into the first half cell (anode containing or cathode containing) and contacting the first electrode,
- the first electrode,
- a diaphragm,
- the next electrode,
- the next half cell (anode containing or cathode containing) and
- the spacers extending into this half-cell from the next bipolar plate.

The next bipolar plate itself is counted as part of the next entire cell. To each such cell, a cell frame for the bipolar plate and a cell frame for the diaphragm is provided. When the cell stack is assembled, the entire stack of cell frames shall be pressured towards each other between the endplates by means of the pull rods, and any soft parts (such as diaphragms and/or electrodes) must give way and assume the combined thickness of the two cell frames, at least while the cell frames are urged against each other. If the diaphragm is a rather soft and flexible, sheet-formed and somewhat spungy and elastically stretchable element and the electrodes on each side, are also made from a flexible material as is the case with the presented EDE sandwich, and if further the spacers have little flexibility in the direction normal to the bipolar plates, then the EDE sandwich shall flex and assume an undulated shape when subject to the pressure from two sides from the mis-aligned spacers. This means, that seen from a first side, there will be shallow valleys around spacers pressuring down on the first side, and flat "hills" around areas where spacers are pressuring the sandwich from an opposed side. In this slightly undulated state, the diaphragm shall be stretched slightly, and the combined effect of the stretch and undulation shall ensure, that a zero-gap relation between the diaphragm and the electrode on each side thereof remains.

The undulation is defined as the measure between hill tops and valleys in the direction normal to the bipolar plate.

The combined nominal thickness of the EDE element shall preferably exceed the distance between adjacent virtual planes by a predetermined measure.

If the spacers from opposing bipolar plates in a half cell which protrude towards the half-cell are aligned, the undulation is not possible, as the EDE in this case will be pressured from opposed sides by spacers which sits opposite each other, and an EDE sandwich which is thicker than the distance between opposed virtual planes is not possible without causing damage to the diaphragms and/or the electrodes.

The distance, v, between virtual planes may be zero, and in this case, any EDE sandwich shall give rise to an undulation which corresponds to the thickness of the EDE sandwich. v may well be negative; in which case the undulation shall comprise the sum of the EDE thickness and the distance v (with positive indicator sign).

In an embodiment, it is preferred for the distance v to be negative. The distance v is preferably from -0.1 mm to -1.0 mm.

In an embodiment, the EDE sandwich comprises a diaphragm, which is between 0.1 mm and 0.5 mm thick, and comprise electrodes that are between 0.1 mm and 0.3 mm thick each. The thinnest possible EDE sandwich under these constraints is thus 0.3 mm and the thickest is 1.1 mm.

The upper limit to undulation is defined by spacer height, h, as the thickness of the EDE sandwich minus v which also corresponds to the undulation shall not exceed the height h. In a preferred embodiment v is -0.3 mm and the EDE sandwich is 1.1 mm, while h is 4.90 mm. This leaves a head space above the hills of: $4.90 mm - \left(1.1 mm-\left(-0.30 mm\right)\right) = 4.90 mm - 1.40 mm = 3.50 mm .$

In an embodiment, the bipolar plates each have at least one orientation tab and/or indent which is provided in each bipolar plate radially external to the outermost circle of spacers whereby the orientation tab and/or indent is located at the same location with respect to the spacers in all plates, such that any spacer is mapped out with respect to at least one tab and/or indent in the same way in all plates.

The orientation tabs and/or indents provided at the rim of each bipolar plate aids in aligning the plates with respect to each other. Especially if a corresponding tab/indent is provided in each cell frame, as in this case, the bipolar plate may be arranged in the cell according to the orientation feature of the cell frame and bipolar plate. This is doable, as cell frames used for the bipolar plates are stacked with respect to each other in the same way throughout one cell stack.

In an embodiment, in the bipolar plates, each spacer comprises a circular conical shoulder part rising from the midplane and a flat circular top and rounded interface between the midplane and shoulder parts and similarly rounded interface between the shoulder part and the flat top.

The flat top may serve as a welding surface whereto the electrode is fastened, and the shoulder parts, with rounded interfaces are instrumental in both ensuring a smooth flow around any spacer and ensuring that the spacers may be pressed or drawn out from the plate material of the bipolar plate in a well-known process of manufacturing. The electrode is made from a stretchable material such as stretch metal or the like, so that between spacers the electrode may deviate from a plane shape as will be necessary when the stack is assembled.

In an embodiment, the flat tops of spacers protruding from the bipolar plates are inscribed in a virtual plane, and this virtual plane is parallel to the midplane of the plate from which the spacers protrude, and further, if the distance between the virtual plane and the midplane is h and the diameter of the outermost of the concentric circles is D, then the D/h size relation is no smaller than 100 and no bigger than 135 and preferably is between 115 and 125.

The flat tops of the spacers being inscribed in the virtual plane is to be construed mathematically such that the sum of distances between the flat tops and the virtual plane is minimized under the condition that the virtual plane extends in parallel to the midplane of the bipolar plate. The D/h size relation is chosen to ensure, that a reasonable flow in the cell may be accomplished without overly large pump capacity. Also, this relation is instrumental in securing an undulation, which is aggregable given the materials used for the EDE, also if a larger or somewhat smaller plate should be desired. In an embodiment the D/h measure equals 122.

In an embodiment, in the bipolar plates, the number of concentric circles is no less than 7.

Further, the concentric circles may be arranged with equal distances between them, such that in a section through the centre of the concentric circles of spacers, the radial distance from one concentric circle to the next is the same throughout the bipolar plate.

Having the concentric circles arranged with same distances helps in ensuring that spacers are evenly distributed on the plate. Arranging spacers exactly evenly distributed along each concentric circle is possible, but small variations are bound to exist between individual circles in terms of distances between spacers due to geometric and numeric constraints. This is of little or no consequence as an overall even distribution of spacers will be possible, so that no larger areas of the bipolar plate is left without spacers.

In a further embodiment, a single spacer may further be provided in the centre of the concentric circles.

In another aspect, the objects of the invention are achieved by the use of bipolar plates as defined in in any one of the embodiments of the first aspect of the invention, and wherein during use, the plates are arranged in a stack with the EDE sandwich pressurized between spacers of individual plates, and further, all bipolar plates have at least one orientation tab/indent aligned rotationally with respect to each other in the stack and are further flipped such that all spacers in the plates in a cell stack which are aligned along one length axis direction of the stack shall protrude in one predetermined direction only. When the bipolar plates are used in this fashion, they can ensure that the EDE sandwich is pressurized from two opposed sides without points of concentrated stresses. The stress shall be more evenly distributed such that a construction having a nominal thickness of the EDE sandwich which exceeds the distance between spacer surface virtual planes in two assembled adjacent half-cells shall be workable or even advantageous. In such an assembly, the zero-gap desired between diaphragms and their adjacent electrodes is improved. As stresses are distributed over the diaphragm and the adjacent electrodes, electrodes overall may accept higher pressure differences between the two sides of a membrane before they are permanently damaged.

In a third aspect, the invention concerns a method of assembly of a water electrolysis stack holding, among others, a range of identical bipolar plates which have arrays of spacers extending away from a midplane in two opposed directions. According to this aspect, the bipolar plates throughout the stack are arranged during assembly, such that all spacers in the range of plates are aligned along axes, which are parallel to the length axis of the stack, and further, all spacers along any one alignment axis protrude in one and the same direction.

As long as the spacers in question are aligned along one and the same alignment axis, which is parallel to a stack centre axis, they shall protrude in one direction only. Preferably the arrays of spacers comprise spacers arranged in concentric circles and in such a manner, that spacers alternatingly protrude in each their direction along each circle. This arrangement of spacers ensures that spacers protruding towards the same EDE sandwich from each their side thereof are never in alignment, and a more even distribution of stresses in the EDE shall be obtained.

In an embodiment of the method of assembly, during assembly, a nominal height measure of the EDE elements of a cell exceed the distance between the virtual planes comprising the flat tops of spacers in opposed bipolar plates, such that the EDE elements between the spacers are caused to undulate between the two arrays of spacers in the opposed bipolar plates as the stack elements are pressed against each other.

This method of assembly ensures a very stable zero gap distance between the diaphragm and the electrode on each side thereof, also when the pressure differences between the two sides of the EDE are not always within the prescribed limits.

According to an embodiment of the assembly method, at least one orientation tab and/or indent provided along an edge part of the otherwise circular bipolar plate is co-aligned with respect to a corresponding tab and/or indent at a cell frame onto which the bipolar plate is mounted during assembly.

In this way, all plates shall be aligned in the same manner in a stack, as every other cell frame shall be stacked in the exact same rotational position, and thus receive the bipolar plate oriented according to a below or above arranged bipolar plate in the stack. Every cell frame arranged between two cell frames carrying a bipolar plate shall be charged with a diaphragm to form the EDE sandwich.

In yet another embodiment of the method of assembly, it is ensured that prior to adding a bipolar plate to a cell frame, each spacer protruding from a first side of the bipolar plate is welded to an electrode and that each spacer protruding from a second side of the bipolar plate is welded to a further electrode, whereby the electrodes prior to the welding operation are rotated such that an orientation marker on the electrode is orientated in a predefined manner with respect to an orientation feature in the corresponding bipolar plate.

This predefined orientation of the electrode with respect to the bipolar plate will allow a uniform orientation of all electrodes in a stack. Such an orientation may be important to certain types of electrodes which are sensitive to the flow direction in the cell. These electrodes need to always have the electrolyte flow in a predefined principal flow direction with respect to their mechanical build. And thus, they need to be oriented according to inlet and outlet in each individual half-cell. Inlets and outlets as such are not marked on the bipolar plate, however, when the bipolar plates are arranged in the cell frame as described, the inlet and outlet will be defined, and the electrodes thus need only to be oriented correctly with respect to the bipolar plate in order to receive the flow of electrolyte from the preferred direction when mounted in the cell frame which defines the inlet and outlet.

In a further embodiment of the assembly method, during assembly, the bipolar plates are either all rotated and/or flipped to have the cathode electrode face an endplate with inlets and outlets for the electrolysis processes in the assembled stack, or the bipolar plates are all rotated and/or overturned to have the cathode electrode face away from the endplate with the inlets.

In a well-known electrolyser configuration, two stacks are electrically interconnected, such that an electrical high potential (such as electrical positive potential) is supplied to the far end of one of the stacks, and at an opposed near end or proximal end of the stack, an electrical connection to the proximal end of the next stack is established. Further, this next stack is supplied with a high potential at its far or distal end, however, with the opposite sign from the potential supplied at the far end of the first stack and in this case that would be an electrical negative potential. At the proximal ends of the two stacks, a near zero potential shall reside, under the condition that the two stack realises equal electrical potential loss, which is the usual case. At these zero potential ends of the stacks, connections for the supply and extraction of the electrolytic fluids are customarily arranged. In such an arrangement, the bipolar plates with electrodes are to face in opposite directions with respect to the zero potential or proximal end of the stack to face the correct electrical potential in both stacks. To this end, it is advantageous that the bipolar plates are rotated about a diameter axis (flipped) such that the cathode or anode part of the electrodes adhering to the bipolar plates may be arranged to face either the proximal or the distal end of the stack.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of uncited features. The features recited in dependent claims are mutually freely combinable unless otherwise explicitly states. Furthermore, it is to be understood that the use of "a" or "an", i.e. a singular form, throughout this document does not exclude a plurality.

It should be emphasized that the term "comprises/comprising/comprised of" when used in this specification is taken to specify the presence of stated features, integers, steps or components but does not preclude the presence or addition of one or more other features, integers, steps, components or groups thereof.

### Brief description of the drawings

In the following, the invention will be described in greater detail with reference to embodiments shown by the enclosed figures. It should be emphasized that the embodiments shown are used for example purposes only and should not be used to limit the scope of the invention.
Fig. 1A is a schematic representation of a sliced section through two bipolar plates according to the invention,
Fig. 1B is a schematic representation of a sliced section through two bipolar plates according to a prior art configuration,
Fig. 2 is a drawing of a plane view of the spacer pattern on one side of a prior art bipolar plate,
Fig. 3 is a plane view of a spacer pattern for the two sides of a bipolar plate with orientation features shown in enlarged view,
Fig. 4 shows an enlarged view of a possible orientation tab,
Fig. 5 shows a plane view of the spacers on one side only,
Fig. 6A shows a view (photo) of an electrode with orientation feature shown in an enlarged view,
Fig. 6B is a rough sketch of the electrode photo of Fig. 6A,
Fig. 6C is a representation of a brilliant (diamond cut) shape for reference,
Fig. 7 is a schematic representation of an electrode and a bipolar plate, both with orientation indent,
Fig. 8 shows a sectional view of bipolar plate with its two electrodes and an enlarged view of a part,
Fig. 9 is an enlarged sectional view through one spacer,
Fig. 10 shows 2 cell stacks in a 3D sectional view,
Fig. 11 two cell frame details are disclosed in each their plane view is shown,
Fig. 12 displays the details seen in Fig. 11 as they appear on a cell frame,
Fig. 13 shows a sliced sectional view of an undulating EDE between two arrays of spacers protruding towards the EDE from opposed directions and Fig. 14 shows the distance v in an instance where the distance is negative.

### Detailed description of the embodiments

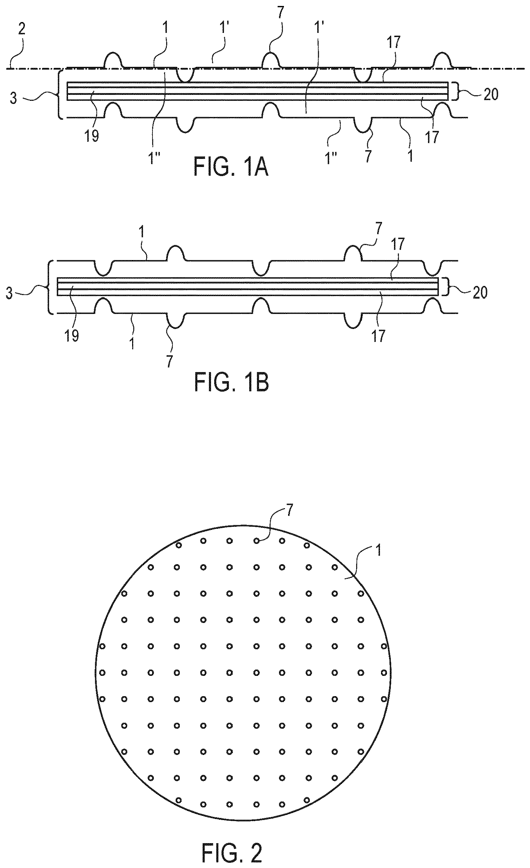

Fig. 1A and Fig 1B show two embodiments of a set comprising two bipolar plates 1. In each embodiment, each bipolar plate 1 comprises two opposed surfaces 1', 1", a first or upwardly facing surface 1' and a second, or downwardly facing surface 1", as well as a plurality of spaced apart spacers 7, each of which spacers 7 extend outwards from either the first surface 1' of the bipolar plate 1 or the second surface 1" of the bipolar plate 1. In each embodiment, both the bipolar plates 1 (or simply plates 1) have an electrode 17 welded to spacers 7 formed on, and extending outward from, the plates 1. In the embodiments shown, the spacers 7 are provided as protrusions formed as e.g. deep drawn indentations in the plate 1. Each protruding spacer 7 has a flat top 13. In the embodiments shown in Figs 1A and 1B, the flat top 13 of the spacer 7 is a circular flat top 13. The electrode 17 is welded to the flat circular tops 13 of a spacers 7 or protrusions. In each of the embodiments, shown in Fig 1A and 1 B, respectively, the uppermost bipolar plate 1 displays an electrode 17 at its lower side, and the lowermost plate 1 shows the electrode 17 at its upper side. Between the electrodes 17, a diaphragm 19 is provided, and it is desired, that the electrodes 17 in both sides thereof always remain in a zero-gap configuration with the diaphragm 19 at any point of the diaphragm. In a cell stack configuration, electrodes 17 shall be welded to both sides of all bipolar plates 1.

In Fig. 1A it is shown, that spacers 7 of the upper and the lower plates are aligned and have the same orientation. Thus, any upwards directed spacer in the lower plate sits right below a similarly upwards directed spacer in the upper plate in the figure. This ensures that at no point, will a set of spacers which both protrude towards the EDE on the two sides thereof be aligned.

Fig. 1A further shows a midplane 2 of the uppermost bipolar plate 1. The spacers 7 can also be considered as extending in opposite directions from the midplane 2. It will be appreciated that each bipolar plate 1 has a midplane 2.

In some embodiments, and as shown in e.g. Fig 1A, the spacers 7 are formed as protrusions (or bumps), extending from the bipolar plate 1 (plate 1).

In some embodiments, and as shown in e.g. Fig 1A, the spacers 7 are formed as essentially semi-spherical protrusions, protruding from the bipolar plate 1.

In a further embodiments, the protrusions forming the spacers 7 each comprises a flat top part 13.

Fig. 1B is a possible prior art configuration of the elements shown in Fig. 1A. Here the downward directed spacers 7 in the upper bipolar plate 1 are aligned with the upward directed spacers 7 in the lower of the two shown bipolar plates 1. Thus, the EDE sandwich 20 appears to be pinched between the aligned spacers. Especially at elevated pressure differences between the pressure on a cathode side and an anode side of the diaphragm in a stack, the EDE sandwich 20 may suffer, and electrodes can become permanently deformed, which will lead to a gap between diaphragm and electrode, which is undesirable. Further, in this prior art construction, it is not easy to accommodate manufacturing tolerances as any oversizing of the EDE will inevitably lead to either the diaphragm, the electrodes, or both being overly pinched between spacers, or if the EDE is undersized, a gap between the diaphragm and the electrode is most likely to materialize to the detriment of the efficiency of the electrolyser stack.

A cell stack 4 comprises a number of electrolyser cells 3 provided in a row next to each other. The cell frames 5 are pressured against each other between two opposed endplates 6, 23 to form alternating catalytic and analytic process chambers separated from each other by diaphragms 19. An electrolytic cell 3 may then comprise the following stack members in the mentioned order: bipolar plate, electrode (cathode or anode), diaphragm, electrode (cathode or anode). Thus, every other cell frame is charged with a bipolar plate and the electrodes in either side thereof, and every other cell frame is charged with a diaphragm. If the first electrode is an anode, the electrode following the diaphragm is a cathode and vice versa.

In Fig. 2, the spacers 7 in a prior art plate protruding the one way away from the plate plane are shown, and it is visualised how they are aligned along straight vertical and horizontal lines in a 2D array. Any four such neighbouring spacers will form the corners of a rectangle. It is also shown, that near the edges of the plate, some rather large patches are without spacers. This increases the risk of parts of the rim areas of the diaphragm remaining un-supported. Extra spacers could be added; however, they would inevitably result in spacers being closer together on the plate than average, and this would lead to spacers providing un-desired obstacles for the uniform flow of electrolyte in the space between the spacer and the diaphragm along the plane of the plate, and also even if spacers were added to a prior art plate, these could not in any reasonable way be made to protrude in the same direction on adjacent plates while adding to the support of the EDE.

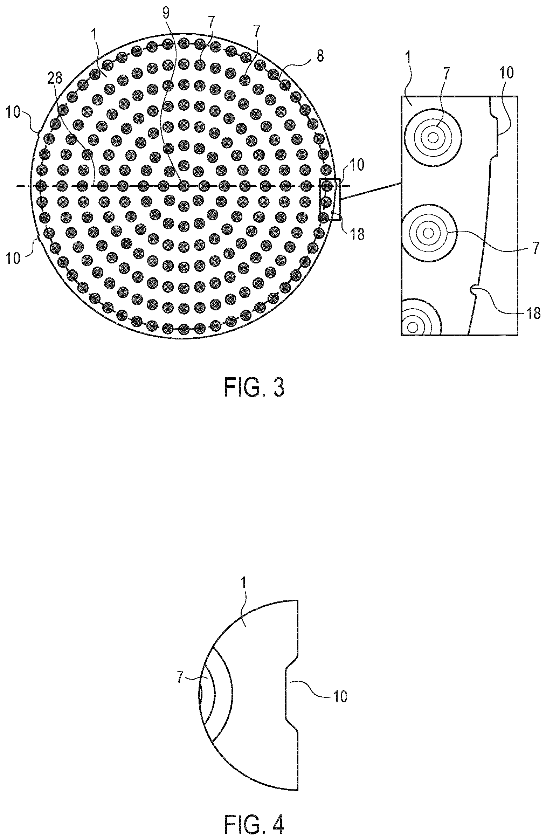

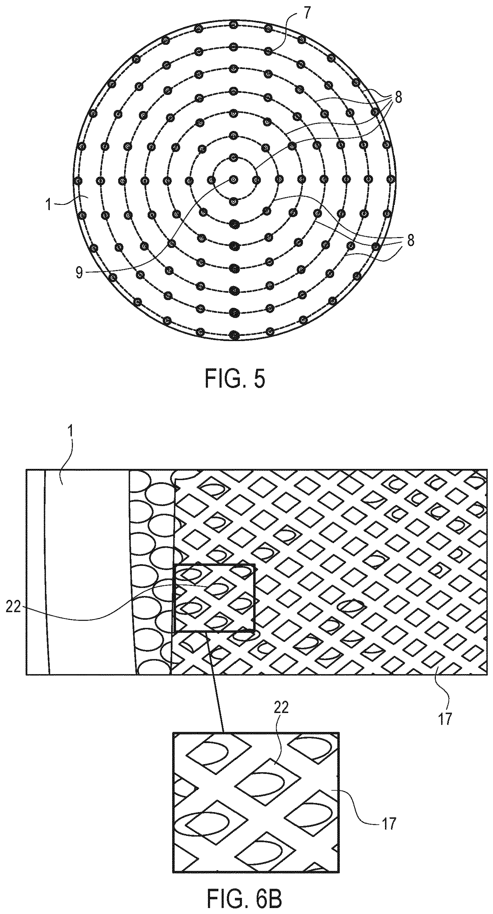

In Fig. 3, a plane view of a plate 1 according to the invention is disclosed, whereby both spacers pointing towards and away from the viewer are shown. All spacers 7 are arranged along concentric circles 8 and along each circle, spacers 7 alternatingly protrude in each their direction with respect to a midplane 2 of the plate 1. In Fig. 5, only spacers 7 protruding in one direction are disclosed, and here it is clear, that along the periphery of the circular plate, the spacers are evenly distributed. As also seen in Fig. 3 and 5, there are seven concentric circles 8 plus the innermost circle 9, which comprise only one spacer. The single spacer 7 provided in the innermost circle 9 can also be considered to be formed at the centre of the concentric circles. All radial distances from one circle to the next are alike. Mathematically speaking, the plate comprises a midplane 2 defined by a normal vector (not shown), and the spacers protrude along this normal and its opposite. However, the plate shall be manufactured with the spacers with usual tolerances for metal plates having a thickness of around 0.5 mm.

A cell height, as indicated at reference number 3 in Fig. 1A shall in the stack direction correspond to the combined height of two cell frames: one frame 5 for a bipolar plate 1 and one frame 5 for the mounting of a diaphragm 19. The two frames are identical and their combined height shall correspond to the combined height of the EDE sandwich 20 and a bipolar plate 1 including the spacers on each side thereof. When this is ensured, ideally the diaphragms shall be in contact with the electrodes on each side thereof when the stack is assembled. However, manufacturing tolerances may at times lead to small gaps between diaphragm and electrodes, and events of unwanted pressure differences between the cathode and anode side of the diaphragm may lead to electrode injury, and as mentioned this may especially be a problem in prior art stack assemblies, where the spacers may be aligned on each side of a diaphragm. The misalignment of the spacers 7 directed towards the EDE sandwich according to the invention, as shown in Fig. 1A, allows for the combined height of the EDE sandwich 20 and bipolar plate to exceed the actual or nominal height of the parts. Thus, the inside of a cell shall have a combined height, which nominally exceeds the height of the two cell frames constituting the height of the cell when assembled. This is only possible as the misaligned spacers supporting the EDE sandwich 20, allows this sandwich to slightly undulate, and give way to the spacers, as the spacers 7 will be experienced as too high in each half-cell. It should be mentioned that the diaphragm at the cell inner rim, is maintained and fastened to the cell frame all around the inner perimeter of the cell frame. However, the diaphragm is usually an element with some elasticity and thus a small stretch of the material is acceptable, and this stretch will also contribute to ensure, that a zero-gap relationship between the diaphragm and the electrodes is maintained.

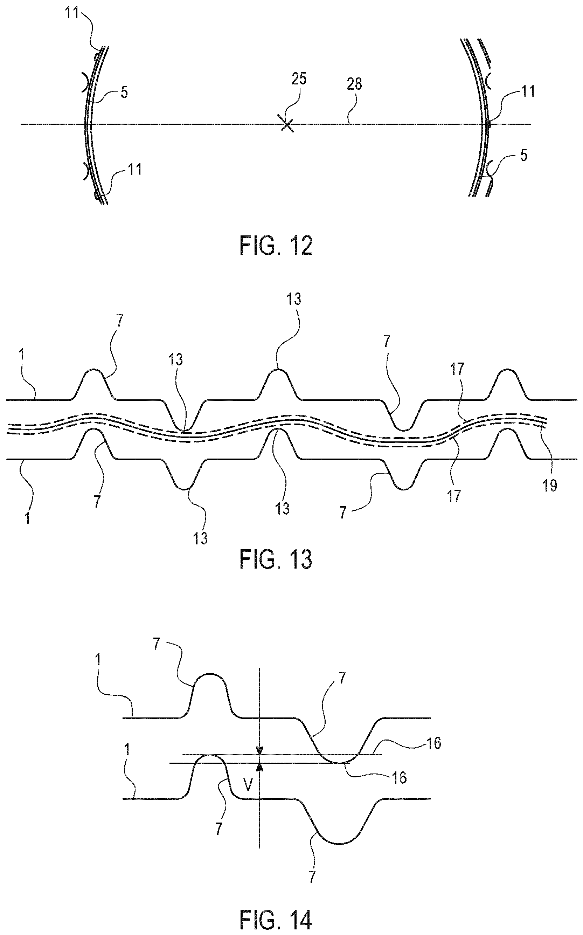

A plane inscribing the flat tops 13 of the spacers 7 is termed a virtual plane 16, and the distance between two such neighbouring planes 16 is to accommodate the EDE sandwich. The distance is termed v. If the distance v between the virtual planes 16 is zero, the flat tops of the spacers from the one plate will be aligned with the flat tops of the spacers on the next plate in a half cell. If the distance between the virtual planes is negative as shown in both Fig. 13 and Fig. 14, the flat tops of the downwardly directed spacers of a top plate, are lower down than the tops of the upwardly directed spacers of a below plate. In this case even an infinitely thin EDE sandwich shall undulate to reside between the upwards and downwards directed spacers such as shown in Fig. 13.

In an embodiment as shown in Fig. 13, the distance between the virtual planes v is - 0.3 mm and the EDE has a combined thickness t of 1.1 mm. The diaphragm is 0.5 mm, and the two electrodes are each 0.3 mm in nominal thickness. This gives an undulation height of $t - v = 1.1 mm - \left(-0.3 mm\right) = 1.4 mm ,$ such that the nominal difference between the top of hills and the depths of valleys will be 1.4 mm.

If the distance from the top of a so named hill and to the midplane 2 of an oppositely arranged bipolar plate is termed headspace, it will be clear from Fig. 13, that the headspace is calculated as the height h of spacers minus the EDE thickness t plus the distance v (with indicator sign). In the example above the height the spacers h is 4.90 mm, the EDE thickness t is 1.10 mm and v is -0.30 mm thus providing a headspace of 4.90 - 1,1 - 0.3 mm = 3.50 mm. The headspace should preferably not be zero or less. If the headspace exceeds the spacer hight h, the EDE sandwich is not in touch with the spacers, and zero gap cannot be maintained. The thickness of the bipolar plate has been ignored in this calculation but is easy to include but would not alter the results significantly.

In Fig. 3, three orientation tabs 10 are seen along the perimeter or rim 32 of the bipolar plate 1. The spacers 7 on all produced plates shall be mapped out with respect to the tabs 10. In the cell frames 5, which are usually injection moulded annular, flat, polymer elements, similarly arranged recesses 11 shall be provided, such that the plate shall fit into the cell frame 5 in only one rotational position with respect to the cell frame. As shown in Fig. 3, there are three such tabs 10, and they are arranged symmetrically with respect to a diameter line 20, and this allows for the plate 1 to be overturned or flipped (rotated about an axis running in the midplane 2) and still fit within the cell frame. This is required to ensure that all plates 1 have their spacers aligned as disclosed in Fig. 1A.

Fig. 4, in a top view, shows a detail of a bipolar plate 1, similar to the bipolar plate 1 shown in Fig. 3. In Fig. 4, an indent 10 is disclosed, which when added to the outer rim 32 of the bipolar plate 1, may work in the same fashion as the tab 10 in Fig. 3, with corresponding changes made to the cell frame 5.

Fig. 5 shows all the spacers 7 extending in one direction from a bipolar plate 1 according to the invention. As seen, along the periphery, the spacers 7 are evenly spaced apart from each other and follow the trace of a circle 8. As is clear from Fig. 3, the outermost circle of spacers on the plate 1 is concentrically arranged with respect to the circular outline of the plate 1. In Fig. 3 it is seen, that along each circle, the spacers protrude alternatingly each their way with respect to the plate midplane, and in order to accomplish this, an even number of spacers must be provided in each circle. Also, with this constraint, exactly the same distance between spacers along each circle will not be possible, however minor differences in distances between spacers from one circle to the other circles will not disturb the achieved effect of evenly distributed stresses in the EDE.

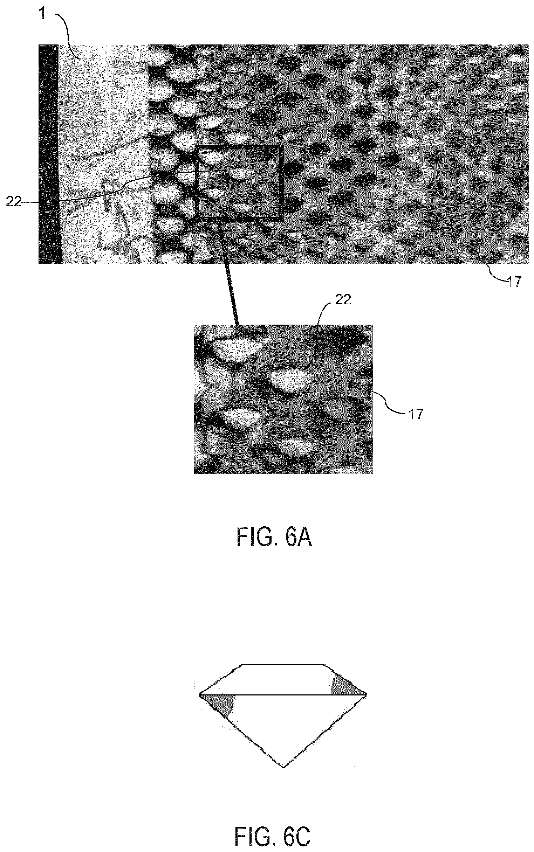

In Fig. 6A, an example of an electrode is disclosed in a photographic representation and arranged in its place relative to the bipolar plate 1. In the enlarged view of a square segment, a single feature of the electrode 17 is shown, namely the outline of an orifice in the electrode material. The orifice has an outline shape similar to the sectional shape of a brilliant 22 (diamond cut) with a domed side opposite an angle pointing away from the domed shape. During use, a fluid flow of the electrolyte will be arranged, such that in the space between the bipolar plate 1 and the diaphragm 19, the electrolyte will flow between the spacers from an inlet to an oppositely placed outlet. In certain types of electrodes 17, such as the electrode shown in Fig. 6, it is preferred that this electrolyte flow has a predefined direction relative to a brilliant trace 22 of the orifices. To this end, it is desirous that the electrodes 17 are also oriented in a predefined manner with respect to the bipolar plate 1 prior to the welding process, which fastens the electrode 17 onto the flat top 13 of each spacer 7 at one side of the plate 1. Fig. 6B, in sketch form, shows a line drawing of the photographic representation of Fig. 6A. In the sketch Fig. 6B, the brilliant shape is represented by a simpler geometrical representation, but it will be understood that it should be shaped like a brilliant 22, the standard shape of which (side view) is represented in Fig. 6C.

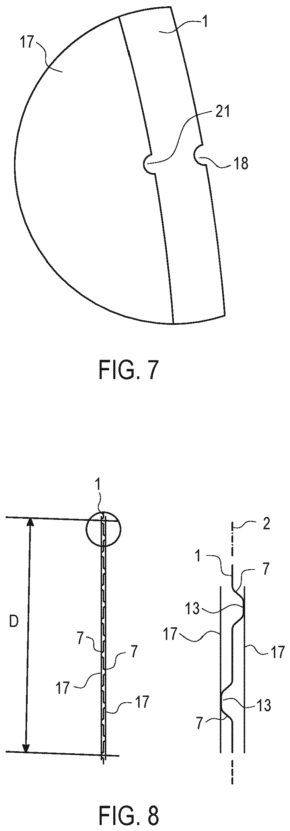

In Fig. 7 and in Fig. 3, it is shown that the bipolar plate 1 has an electrode orientation feature 18, which shall correspond to a similarly shaped orientation marker 21 in the electrode 17. When the electrode orientation feature 18 in the bipolar plate is aligned with the orientation marker 21 in the electrode 17 as seen in Fig. 7, the electrode 17 will be rotated in a predefined manner with respect to the bipolar plate 1, and the two may now be welded to each other in this mutual rotational relationship. Once placed in the cell frame 5 with the orientation tabs 10 placed in the corresponding tab and/or indent 11 at a cell frame 5, it is ensured that in a cell frame, inlets and outlets are automatically arranged to ensure a general flow direction according to the orientation of the brilliant trace 22 of the electrode 17. The inlets and outlets (not shown) at the cell frame and into the electrolytical chambers on each side of the bipolar plate shall thus also be mapped out with respect to the orientation tab and/or indent 11 at the cell frame 5.

In Fig. 8, a schematic representation of a part of the bipolar plate 1 with an electrode 17 welded to each side thereof is disclosed. In the enlarged part to the left in Fig. 8, the flat tops 13 of the spacers 7 are clearly visible.

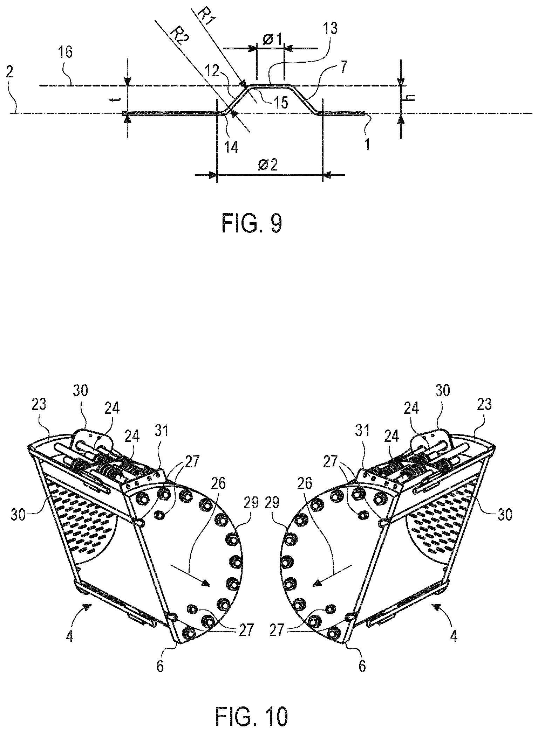

In Fig. 9, a sectional view of one embodiment of a spacer 7 is disclosed. In this embodiment, the spacers 7 are formed as protrusions (or bumps), extending from the plate. In this embodiment, each spacer 7 comprises a circular conical shoulder part 12 rising from the surface 1', 1" of the bipolar plate 1, and a flat circular top 13. The shoulder part can also be considered to rise from the midplane 2. A rounded interface 14 is provided between the surface 1', 1" of the bipolar plate 1 and the shoulder part 12. Similarly, a rounded interface 15 between the shoulder part 12 and the flat top 13 is provided. Here Ø1 is the diameter of the flat top part 13 of the spacer, R1 and R2 are rounding diameters of the intersection between the midplane 2 and shoulder 14 and the intersection between the shoulder part 12 and the flat top part 13. h is the distance between the virtual plane 16 in which the flat parts 13 reside and the midplane 2. t is the thickness of the bipolar plate 1. Ø2 is the diameter of the spacer 7 from onset of the rounded interface 14 in the midplane 2. If D is the diameter of the outermost circle of spacers 7 when projected onto the midplane 2, it is preferred that the D/h quotient is between 100 and 135, preferably between 115 and 119. In a most preferred embodiment, the D/h quotient is between 116 and 118.

Two cell stacks 4 are shown in Fig. 10 in a sectional view. The inside of the stack 4 which comprises bipolar plates, diaphragms and electrodes are not part of the figure. The stacks are each confined between endplates 6, 23, and sets of pull rods 24 and nuts 29 are provided between the two endplates 6, 23 externally of the cell frames. In this way an internal high pressure may be maintained inside the cell frames 5, as they are urged together between the two endplates 23 by means of the pull rods 24 and corresponding nuts 29. Fluid connection means 27 are provided at one of the endplates, namely the proximal endplate 6 at each cell stack 4. In an embodiment, positive and negative poles of an electric current supply are connected to distal current injection plates 30 provided at the far or distal ends (proximal to distal endplates 23) of the two stacks shown in Fig. 10, whereas proximal current injection plates 31 at the proximal ends of the stacks are short circuited such that electric current shall pass through the one cell stack and into the opposed stack in Fig. 10. At the proximal endplates 6, a zero electrical potential is maintained, possibly also aided by a grounded electrical lead (not shown), and thus it is convenient to provide all of the fluid connection means 27 for the two stacks 4 at the proximal endplates 6. In such an embodiment, all bipolar plates in a first stack shall have their one side, such as the cathode side facing the proximal endplate 6, whereas all bipolar plates in the other stack is to have all bipolar plate cathode sides face the distal end plate 23 of this stack. This arrangement may be provided without further ado by allowing the bipolar plates to be overturned when assembled to the cell frames with say, their cathodes facing either the proximal or the distal endplates throughout the entire stack.

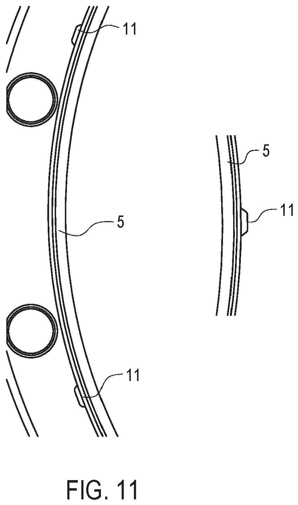

In Fig. 12, part of the same cell frame 5 is shown and on the left- and right-hand sides, the inner rims of the cell frame is shown. On the right-hand side, an orientation indent 11 is shown, along with two similar orientation indents 11 on the left-hand side. As seen in Fig. 12, if a diameter line 28 through the middle of the right-hand side orientation indent 11 is drawn and extended through the centre 25 of the circular structure of the inner rim of the cell frame 5, this diameter line shall be in equal distance from the two left-hand side indents 11. The right- and left-hand side indents are disclosed in Fig. 11 in an enlarged view, as they are barely visible in Fig. 12. When the orientation indents and/or tabs 11, 10 in the cell frame 5 and bipolar plate 1 are symmetrically provided with respect to a diameter 28 line in the plane of the cell frame 5, it allows for the bipolar plate 1 to be flipped or rotated 180 degrees with respect to a cell frame around such a diameter line 28 in the midplane 2 and still fit with tabs/indents at the cell frame 5. As seen in Fig. 3, the bipolar plate 1 has three orientation tabs 10, and thus this plate 1 shall fit a cell frame disclosed in Fig. 11, either as disclosed in Fig. 3 or when overturned around a diameter line 28 extending through the tab 10 shown on the left-hand side in Fig. 3. Overturning around any axis in the midplane of the bipolar plate will do, however, if an axis different from the diameter line 28 is chosen, fitting the cell frame will require further translation and/or rotation of the plate to become aligned with the features in the cell frame after an overturning or flipping action.

It is to be noted that the figures and the above description have shown the example embodiments in a simple and schematic manner. Many of the specific mechanical details have not been shown since the person skilled in the art should be familiar with these details and they would just unnecessarily complicate this description.

### List of parts

- 1: Bipolar plate (plate)
- 1': surface of bipolar plate formed on one side of the bipolar plate/first surface of bipolar plate
- 1": surface of bipolar plate formed on the other side of the bipolar plate/second surface of bipolar plate
- 2: Midplane of bipolar plate
- 3: Electrolyser cell
- 4: Cell stack
- 5: Cell frame
- 6: Proximal endplate
- 7: Spacer (may be an indention formed in the plate, such that it provides a protrusion extending from a surface/a side of the plate)
- 8: Concentric circle
- 9: Centre of concentric circles
- 10: Orientation tab and/or indent
- 11: Corresponding tab and/or indent at a cell frame
- 12: Conical shoulder part
- 13: Flat circular top
- 14: Rounded interface between midplane and shoulder part
- 15: Rounded interface between shoulder part and circular flat top
- 16: Virtual plane
- 17: Electrode
- 18: Electrode orientation feature in bipolar plate
- 19: Diaphragm
- 20: EDE or Electrode-diaphragm-electrode sandwich
- 21: Orientation marker in electrode
- 22: Brilliant trace (orifice)
- 23: Distal endplate
- 24: Pull rods
- 25: Centre of cell frame inner circular rim
- 26: Length axis of the stack
- 27: Fluid connection means
- 28: Cell frame or bipolar plate diameter line
- 29: Nuts
- 30: Distal current injection plates
- 31: Proximal current injection plates
- 32: rim of bipolar plate
- h: height of spacers from midplane to virtual plane
- D: diameter of outermost ring of spacers on the plate
- v: distance between adjacent virtual planes in a half-cell
- t: thickness of EDE sandwich

## Claims

1. Bipolar plates (1) configured for use in an electrolyser cell stack (4), wherein each bipolar plate (1) comprises two opposed surfaces (1', 1") and spaced apart spacers (7) extending outwards from a surface (1', 1") of the bipolar plate (1), **characterised in that** the spacers (7) are arranged along concentric circles (8) with spacers (7) alternatingly protruding in opposite directions relative to a midplane (2) of the bipolar plate (1) along each concentric circle (8), and wherein an even number of spacers (7) are provided in each circumferential circle (8).

2. Bipolar plates (1) according to claim 1, wherein the spacers (7) are formed as protrusions from the bipolar plate (1).

3. Bipolar plates (1) according to claim 2, wherein the spacers (7) are formed as a essentially semi-spherical protrusions from the bipolar plate (1).

4. Bipolar plates (1) according to claim 2 or 3, wherein the protrusions forming the spacers (7) each comprises a flat top (13).

5. Bipolar plates (1) according to any one of the claims 1-4, wherein the nominal thickness of an electrode-diaphragm-electrode (EDE) (20) comprising an electrode (17), a diaphragm (19) and yet an electrode (17) exceeds the distance between two neighbouring virtual planes (16) with a predetermined measure where the virtual planes inscribe flat tops (13) of protrusions (7) protruding in one direction from the bipolar plate (1).

6. Bipolar plates (1) according to any one of the claims 1-5, **characterised in that** at least one orientation tab and/or indent (10) is provided in each bipolar plate (1) radially external to the outermost circle of spacers (7) whereby the orientation tab and/or indent (10) is located at the same location with respect to the spacers (7) in all plates, such that any spacer (7) is mapped out with respect to at least one tab and/or indent (10) in the same way in all plates (1).

7. Bipolar plates (1) according to any one of the claims 1-6, wherein each spacer (7) comprises a circular conical shoulder part (12) rising from the surface (1', 1") of the bipolar plate (1)and a flat circular top (13) and rounded interface (14) between the surface (1', 1") of the bipolar plate (1) and shoulder part (12) and similarly rounded interface (15) between the shoulder part (12) and the flat top (13).

8. Bipolar plates (1) according to claim 7, wherein the flat tops (13) of the spacers (7) protruding from a bipolar plate (1) are inscribed in the virtual plane (16), and this virtual plane (16) is parallel to the midplane (2) of the plate (1) from which the spacers (7) protrude, and that, if the distance between the virtual plane (16) and the midplane (2) is termed h and the diameter of the outermost of the concentric circles is termed D, then the D/h size relation is no smaller than 100 and no bigger than 135, and preferably is between 115 and 125.

9. Bipolar plates (1) according to any one of the claims 1-8, wherein the concentric circles (8) are arranged with equal distances between them, such that in a section through the centre of the concentric circles of spacers (7), the radial distance from one concentric circle (8) to the next is the same throughout the bipolar plate (1).

10. Use of bipolar plates (1) according to any one of the claims 1-9, **characterised in that** the bipolar plates (1) during use are arranged in a stack (4) with the EDE sandwich (20) pressurized between spacers (7) of individual bipolar plates (1), and wherein all bipolar plates (1) have at least one orientation tab/indent (10) aligned with each other in the stack (4) length direction (26) and are further rotated around a cell frame diameter line (28) in the midplane (2) such that all spacers (7) in the plates (1) in a cell stack (4), which are aligned along a length axis direction (26) of the stack (4), shall protrude in one predetermined direction only.

11. A method of assembly of a water electrolysis stack (4) holding a range of identical bipolar plates (1) having arrays of identically dispersed spacers (7) extending normally away from opposite surfaces (1', 1") and a midplane (2) of each plate (1) in two opposed directions, **characterised in that** the bipolar plates (1) throughout the stack (4) are arranged during assembly, such that all spacers (7) in the range of plates are aligned along axes, which are parallel to the length axis (26) of the stack (4), and wherein all spacers (7) along any one alignment axis protrude in one and the same direction.

12. The method of assembly according to claim 11, wherein during assembly a nominal height measure of the EDE elements (20) of a cell (3) exceed the distance between the virtual planes (16) comprising the flat tops (13) of spacers (7) in opposed bipolar plates (1), such that the EDE elements (20) between the spacers (7) will undulate between the two arrays of spacers (7) in the opposed bipolar plates (1) as the stack elements are pressed against each other.

13. The method of assembly according to claim 11 or 12, wherein at least one orientation tab and/or indent (10) along an edge part of the otherwise circular bipolar plates is co-aligned with respect to a corresponding tab and/or indent (11) at a cell frame (5) onto which the bipolar plate (1) is mounted.

14. The method of assembly according to claim 11, **characterised in that** prior to adding a bipolar plate (1) to a cell frame (5), each spacer (7) protruding from a first side of the bipolar plate (1) is welded to an electrode (17) and that each spacer (7) protruding from a second side of the bipolar plate (1) is welded to a further electrode (17), whereby the electrodes (17) prior to the welding operation are rotated such that an orientation marker (21) on the electrode (17) is orientated in a predefined manner with respect to an orientation feature (18) in the corresponding bipolar plate (1).

15. The method of assembly according to any one of the claims 11-13, wherein the bipolar plates (1) are either all rotated to have the cathode electrode face an endplate (6) with inlets and outlets for the electrolysis processes in the stack (4) also named proximal endplate (6), or the bipolar plates (1) are all rotated to have the cathode electrode face away from the proximal endplate (6).

## Patentansprüche

1. Bipolarplatten (1), die zur Verwendung in einem Elektrolyseur-Zellenstapel (4) ausgelegt sind, wobei jede Bipolarplatte (1) zwei einander gegenüberliegende Oberflächen (1', 1") und voneinander beabstandete Abstandshalter (7) umfasst, die sich von einer Oberfläche (1', 1") der Bipolarplatte (1) nach außen erstrecken, **dadurch gekennzeichnet, dass** die Abstandshalter (7) entlang konzentrischer Kreise (8) angeordnet sind, wobei die Abstandshalter (7) entlang jedes konzentrischen Kreises (8) abwechselnd in entgegengesetzte Richtungen relativ zu einer Mittelebene (2) der Bipolarplatte (1) vorstehen, und wobei in jedem konzentrischen Kreis (8) eine gerade Anzahl von Abstandshaltern (7) vorgesehen ist.

2. Bipolarplatten (1) nach Anspruch 1, wobei die Abstandshalter (7) als Vorsprünge der Bipolarplatte (1) ausgebildet sind.

3. Bipolarplatten (1) nach Anspruch 2, wobei die Abstandshalter (7) als im Wesentlichen halbkugelförmige Vorsprünge an der Bipolarplatte (1) ausgebildet sind.

4. Bipolarplatten (1) nach Anspruch 2 oder 3, wobei die die Abstandshalter (7) bildenden Vorsprünge jeweils eine flache Oberseite (13) aufweisen.

5. Bipolarplatten (1) nach einem der Ansprüche 1 bis 4, wobei die Nenndicke einer Elektrode-Diaphragma-Elektrode (EDE) (20), bestehend aus einer Elektrode (17), einem Diaphragma (19) und einer weiteren Elektrode (17), den Abstand zwischen zwei benachbarten virtuellen Ebenen (16) um ein vorbestimmtes Maß übersteigt, wobei die virtuellen Ebenen die flachen Oberseiten (13) der Vorsprünge (7) einschließen, die in einer Richtung von der Bipolarplatte (1) vorstehen.

6. Bipolarplatten (1) nach einem der Ansprüche 1-5, **dadurch gekennzeichnet, dass** in jeder Bipolarplatte (1) mindestens eine Ausrichtungslasche und/oder -vertiefung (10) radial außerhalb des äußersten Kreises der Abstandshalter (7) vorgesehen ist, wobei die Ausrichtungslasche und/oder -vertiefung (10) in Bezug auf die Abstandshalter (7) in allen Platten an derselben Stelle angeordnet ist, so dass die Lage jedes Abstandshalters (7) in Bezug auf mindestens eine Lasche und/oder Vertiefung (10) in allen Platten (1) auf dieselbe Weise festgelegt ist.

7. Bipolarplatten (1) nach einem der Ansprüche 1 bis 6, wobei jeder Abstandshalter (7) einen kreisförmigen, konischen Schulterabschnitt (12), der sich von der Oberfläche (1', 1'') der Bipolarplatte (1) und eine flache kreisförmige Oberseite (13) sowie eine abgerundete Übergangsfläche (14) zwischen der Oberfläche (1', 1") der Bipolarplatte (1) und dem Schulterabschnitt (12) und eine ähnlich abgerundete Übergangsfläche (15) zwischen dem Schulterabschnitt (12) und der flachen Oberseite (13) aufweist.

8. Bipolarplatten (1) nach Anspruch 7, wobei die flachen Oberseiten (13) der von einer Bipolarplatte (1) vorstehenden Abstandshalter (7) in die virtuelle Ebene (16) eingeschrieben sind und diese virtuelle Ebene (16) parallel zur Mittelebene (2) der Platte (1) verläuft, von der die Abstandshalter (7) vorstehen, und dass, wenn der Abstand zwischen der virtuellen Ebene (16) und der Mittelebene (2) mit h und der Durchmesser des äußersten der konzentrischen Kreise mit D bezeichnet wird, das Größenverhältnis D/h nicht kleiner als 100 und nicht größer als 135 ist und vorzugsweise zwischen 115 und 125 liegt.

9. Bipolarplatten (1) gemäß einem der Ansprüche 1 bis 8, wobei die konzentrischen Kreise (8) in gleichen Abständen zueinander angeordnet sind, so dass in einem Schnitt durch den Mittelpunkt der konzentrischen Kreise der Abstandshalter (7) der radiale Abstand von einem konzentrischen Kreis (8) zum nächsten über die gesamte Bipolarplatte (1) hinweg gleich ist.

10. Verwendung von Bipolarplatten (1) gemäß einem der Ansprüche 1 bis 9, **dadurch gekennzeichnet, dass** die Bipolarplatten (1) während der Verwendung in einem Stapel (4) angeordnet sind, wobei das EDE-Sandwich (20) zwischen Abstandshaltern (7) einzelner Bipolarplatten (1) unter Druck steht, und wobei alle Bipolarplatten (1) mindestens eine Ausrichtungslasche/-vertiefung (10) aufweisen, die im Stapel (4) in Längsrichtung (26) zueinander ausgerichtet sind, und ferner um eine Zellrahmen-Durchmesserlinie (28) in der Mittelebene (2) so gedreht sind, dass alle Abstandshalter (7) in den Platten (1) eines Zellstapels (4), die entlang einer Längsachsenrichtung (26) des Stapels (4) ausgerichtet sind, nur in eine vorbestimmte Richtung vorstehen.

11. Verfahren zum Zusammenbau eines Wasserelektrolyse-Stapels (4), der eine Reihe identischer Bipolarplatten (1) enthält, die Anordnungen identisch verteilter Abstandshalter (7) aufweisen, die sich senkrecht von gegenüberliegenden Oberflächen (1', 1") und einer Mittelebene (2) jeder Platte (1) in zwei entgegengesetzte Richtungen erstrecken, **dadurch gekennzeichnet, dass** die Bipolarplatten (1) im gesamten Stapel (4) während des Zusammenbaus so angeordnet werden, dass alle Abstandshalter (7) in der Reihe von Platten entlang von Achsen ausgerichtet sind, die parallel zur Längsachse (26) des Stapels (4) verlaufen, und wobei alle Abstandshalter (7) entlang einer beliebigen Ausrichtungsachse in ein und dieselbe Richtung vorstehen.

12. Verfahren zum Zusammenbau nach Anspruch 11, wobei während des Zusammenbaus ein Nennmaß der Höhe der EDE-Elemente (20) einer Zelle (3) den Abstand zwischen den virtuellen Ebenen (16), in denen die flachen Oberseiten (13) der Abstandshalter (7) der gegenüberliegenden Bipolarplatten (1) liegen, überschreitet, sodass sich die EDE-Elemente (20) zwischen den Abstandshaltern (7) wellenförmig zwischen den beiden Anordnungen von Abstandshaltern (7) der gegenüberliegenden Bipolarplatten (1) erstrecken, wenn die Stapelelemente gegeneinander gedrückt werden.

13. Verfahren zum Zusammenbau nach Anspruch 11 oder 12, wobei mindestens eine Ausrichtungslasche und/oder -vertiefung (10) entlang eines Randabschnitts der ansonsten kreisförmigen Bipolarplatten in Bezug auf eine entsprechende Lasche und/oder Vertiefung (11) an einem Zellrahmen (5), auf dem die Bipolarplatte (1) montiert ist, ausgerichtet ist.

14. Verfahren zum Zusammenbau nach Anspruch 11, **dadurch gekennzeichnet, dass** vor dem Anbringen einer Bipolarplatte (1) an einem Zellrahmen (5) jeder von einer ersten Seite der Bipolarplatte (1) vorstehende Abstandshalter (7) mit einer Elektrode (17) verschweißt wird und dass jeder Abstandshalter (7), der von einer zweiten Seite der Bipolarplatte (1) vorsteht, mit einer weiteren Elektrode (17) verschweißt wird, wobei die Elektroden (17) vor dem Schweißvorgang so gedreht werden, dass eine Ausrichtungsmarkierung (21) an der Elektrode (17) in einer vordefinierten Weise in Bezug auf ein Ausrichtungsmerkmal (18) in der entsprechenden Bipolarplatte (1) ausgerichtet ist.

15. Verfahren zum Zusammenbau gemäß einem der Ansprüche 11-13, wobei die Bipolarplatten (1) entweder alle so gedreht werden, dass die Kathodenelektrode einer Endplatte (6) mit Ein- und Auslässen für die Elektrolyseprozesse im Stapel (4) - auch als proximale Endplatte (6) bezeichnet - zugewandt ist, oder die Bipolarplatten (1) alle so gedreht werden, dass die Kathodenelektrode von der proximalen Endplatte (6) abgewandt ist.

## Revendications

1. Plaques bipolaires (1) configurées pour être utilisées dans un empilement de cellules d'électrolyseur (4), dans lesquelles chaque plaque bipolaire (1) comprend deux surfaces opposées (1', 1") et des entretoises espacées (7) s'étendant vers l'extérieur à partir d'une surface (1', 1") de la plaque bipolaire (1), **caractérisées en ce que** les entretoises (7) sont disposées le long de cercles concentriques (8), les entretoises (7) faisant saillie en alternance dans des directions opposées par rapport à un plan médian (2) de la plaque bipolaire (1) le long de chaque cercle concentrique (8), et dans lesquelles un nombre pair d'entretoises (7) est prévu dans chaque cercle circonférentiel (8).

2. Plaques bipolaires (1) selon la revendication 1, dans lesquelles les entretoises (7) sont formées comme des saillies de la plaque bipolaire (1).

3. Plaques bipolaires (1) selon la revendication 2, dans lesquelles les entretoises (7) sont formées comme des saillies essentiellement hémisphériques à partir de la plaque bipolaire (1).

4. Plaques bipolaires (1) selon la revendication 2 ou 3, dans lesquelles les saillies formant les entretoises (7) comportent chacune un sommet plat (13).

5. Plaques bipolaires (1) selon l'une quelconque des revendications 1 à 4, dans lesquelles l'épaisseur nominale d'un ensemble électrode-diaphragme-électrode (EDE) (20) comprenant une électrode (17), un diaphragme (19) et encore une électrode (17) dépasse la distance entre deux plans virtuels voisins (16) d'une valeur prédéterminée, les sommets plats (13) des saillies (7) faisant saillie dans une direction à partir de la plaque bipolaire (1) étant inscrits dans lesdits plans virtuels.

6. Plaques bipolaires (1) selon l'une quelconque des revendications 1 à 5, **caractérisées en ce qu'**au moins une languette et/ou un renfoncement d'orientation (10) est prévu(e) dans chaque plaque bipolaire (1), radialement à l'extérieur du cercle le plus extérieur des entretoises (7), la languette et/ou le renfoncement d'orientation (10) étant situé(e) au même emplacement par rapport aux entretoises (7) dans toutes les plaques, de sorte que chaque entretoise (7) soit alignée par rapport à au moins une languette et/ou un renfoncement (10) de la même manière dans toutes les plaques (1).

7. Plaques bipolaires (1) selon l'une quelconque des revendications 1 à 6, dans lesquelles chaque entretoise (7) comprend une partie d'épaulement conique circulaire (12) s'élevant depuis la surface (1', 1) de la plaque bipolaire (1), ainsi qu'un sommet circulaire plat (13) et une interface arrondie (14) entre la surface (1', 1") de la plaque bipolaire (1) et la partie d'épaulement (12), et une interface de même manière arrondie (15) entre la partie en épaulement (12) et le sommet plat (13).

8. Plaques bipolaires (1) selon la revendication 7, dans lesquelles les sommets plats (13) des entretoises (7) faisant saillie à partir d'une plaque bipolaire (1) sont inscrits dans le plan virtuel (16), et ce plan virtuel (16) est parallèle au plan médian (2) de la plaque (1) à partir de laquelle les entretoises (7) font saillie, et que, si la distance entre le plan virtuel (16) et le plan médian (2) est notée h et le diamètre du cercle concentrique le plus extérieur est noté D, alors le rapport de taille D/h n'est pas inférieur à 100 ni supérieur à 135, et se situe de préférence entre 115 et 125.

9. Plaques bipolaires (1) selon l'une quelconque des revendications 1 à 8, dans lesquelles les cercles concentriques (8) sont disposés à des distances égales les uns des autres, de telle sorte que, dans une section passant par le centre des cercles concentriques des entretoises (7), la distance radiale d'un cercle concentrique (8) au suivant soit la même sur toute la plaque bipolaire (1).

10. Utilisation de plaques bipolaires (1) selon l'une quelconque des revendications 1 à 9, **caractérisée en ce que** les plaques bipolaires (1), pendant leur utilisation, sont disposées en une pile (4) avec le sandwich EDE (20) mis sous pression entre les entretoises (7) des plaques bipolaires individuelles (1), et dans laquelle toutes les plaques bipolaires (1) comportent au moins une languette ou un renfoncement d'orientation (10) alignées les unes par rapport aux autres dans la direction longitudinale (26) de la pile (4) et sont en outre pivotées autour d'une ligne diamétrale (28) du cadre de la cellule dans le plan médian (2), de telle sorte que toutes les entretoises (7) des plaques (1) d'une pile de cellules (4), qui sont alignées le long d'un axe longitudinal (26) de la pile (4), ne font saillie que dans une seule direction prédéterminée.

11. Procédé d'assemblage d'une pile d'électrolyse de l'eau (4) comportant une série de plaques bipolaires identiques (1) présentant des réseaux d'entretoises (7) dispersées de manière identique, s'étendant perpendiculairement à partir des surfaces opposées (1', 1") et d'un plan médian (2) de chaque plaque (1) dans deux directions opposées, **caractérisé en ce que** les plaques bipolaires (1) de l'ensemble de la pile (4) sont disposées lors de l'assemblage de telle sorte que toutes les entretoises (7) de l'ensemble des plaques soient alignées le long d'axes parallèles à l'axe longitudinal (26) de la pile (4), et dans lequel toutes les entretoises (7) situées le long d'un axe d'alignement quelconque font saillie dans une seule et même direction.

12. Procédé d'assemblage selon la revendication 11, dans lequel, lors de l'assemblage, une hauteur nominale des éléments EDE (20) d'une cellule (3) dépasse la distance entre les plans virtuels (16) formés par les sommets plats (13) des entretoises (7) dans les plaques bipolaires opposées (1), de sorte que les éléments EDE (20) situés entre les entretoises (7) ondulent entre les deux réseaux d'entretoises (7) des plaques bipolaires opposées (1) lorsque les éléments de la pile sont pressés les uns contre les autres.

13. Procédé d'assemblage selon la revendication 11 ou 12, dans lequel au moins une languette d'orientation et/ou un renfoncement (10) situé le long d'une partie de bord des plaques bipolaires, par ailleurs circulaires, est aligné par rapport à une languette et/ou un renfoncement correspondant (11) sur un cadre de cellule (5) sur lequel la plaque bipolaire (1) est montée.

14. Procédé d'assemblage selon la revendication 11, **caractérisé en ce qu'**avant d'ajouter une plaque bipolaire (1) à un cadre de cellule (5), chaque entretoise (7) faisant saillie d'un premier côté de la plaque bipolaire (1) est soudée à une électrode (17) et **en ce que** chaque entretoise (7) faisant saillie d'un deuxième côté de la plaque bipolaire (1) est soudée à une autre électrode (17), les électrodes (17) étant, avant l'opération de soudage, tournées de telle sorte qu'un repère d'orientation (21) sur l'électrode (17) soit orienté d'une manière prédéfinie par rapport à un élément d'orientation (18) dans la plaque bipolaire (1) correspondante.

15. Procédé d'assemblage selon l'une quelconque des revendications 11 à 13, dans lequel les plaques bipolaires (1) sont soit toutes pivotées de manière à ce que l'électrode cathodique soit tournée vers une plaque d'extrémité (6) comportant des entrées et des sorties pour les processus d'électrolyse dans la pile (4), également appelée plaque d'extrémité proximale (6), soit toutes pivotées de manière à ce que l'électrode cathodique soit tournée à l'opposé de la plaque d'extrémité proximale (6).
